# EUROPÄISCHE PATENTSCHRIFT

(11) **EP 3 130 440 B1**
(45) Veröffentlichungstag und Bekanntmachung des Hinweises auf die Patenterteilung: **09.12.2020**
(21) Anmeldenummer: 16180594.0
(22) Anmeldetag: 21.07.2016
(51) Int. Cl.: B29C 44/14, B29C 44/34, B29C 44/12, B29K 75/00, B29L 31/30

(54) **FORMTEIL UND VERFAHREN ZUR HERSTELLUNG EINES DERARTIGEN FORMTEILS**
MOULDING AND PROCESS FOR THE PRODUCTION OF A MOULDING
PIÈCE MOULÉE ET PROCÉDÉ DE PRODUCTION DE PIÈCES MOULÉES

(30) Priorität: 07.08.2015 DE 102015113027
(43) Veröffentlichungstag der Anmeldung: 15.02.2017
(73) Patentinhaber: Josef Weischer GmbH & Co. KG, 48282 Emsdetten (DE)
(72) Erfinder: Stegemann, Carsten, 48369 Saerbeck (DE); Hune, Rupert, 49090 Osnabrück (DE)
(74) Vertreter: Binder, Armin

(56) Entgegenhaltungen:
- EP-A2- 2 087 985
- WO-A2-2008/012435
- DE-A1-102012 219 107
- JP-A- H04 175 112
- US-A- 5 945 200
- US-A1- 2003 020 196

## Beschreibung

Die Erfindung betrifft ein Formteil, sowie zwei unterschiedliche Verfahren zur Herstellung eines Formteils mit einer derartigen Vorrichtung.

Als "Formteile" werden allgemein Verbundbauteile bezeichnet, die aus mindestens zwei unterschiedlichen Bestandteilen bestehen und eine vorgegebene, geometrische "Form" aufweisen. So können derartige Formteile beispielsweise Verkleidungsteile für Kraftfahrzeuge, wie Instrumententafeln, Türverkleidungen oder Handschuhkastendeckel sein. Gerade bei den zuvor erwähnten Verkleidungsteilen für Kraftfahrzeuge besteht ein sehr wesentliches Problem der Herstellung darin, dass diese eine komplexe Geometrie aufweisen und darüber hinaus zum Teil mit Aussparungen ausgestattet werden müssen, die später den Einbau von Armaturen oder Instrumenten gestatten. Derartige Formteile bestehen zumeist aus einem Träger, einer Formhaut und einer zwischen dem Träger und der Formhaut eingebrachten Schaumstoffschicht, wobei der Schaumstoff dieser Schaumstoffschicht aus einem ursprünglich flüssigen Reaktionsgemisch, bei dem es sich in der Regel um aufgeschäumtes Polyurethan (PU) handelt, besteht. Polyurethane sind Kunststoffe oder Kunstharze, die aus der Polyadditionsreaktion von Dialkoholen beziehungsweise Polyolen mit Polyisocyanaten entstehen. Bei der chemischen Reaktion wird Kohlendioxid (CO₂) freigesetzt. Der Schaumstoff des Formteils verbindet den Träger stoffschlüssig mit der Formhaut, wenn er vollständig ausreagiert und damit aufgeschäumt ist. Die Formhaut kann bei den zuvor erwähnten Verkleidungsteilen für Kraftfahrzeuge ein farbliches Dekor, ein Lederbezug oder auch eine Kunststoffschicht sein, die beispielsweise bei einem Armaturenbrett dessen sichtbare Oberfläche bildet. Wenn im vorliegenden Zusammenhang von einer "Formhaut" die Rede ist, so sollte dieser Begriff daher nicht einschränkend betrachtet werden. Vielmehr kann es sich bei dem mit dem Träger zu verbindenden Bauteil auch um andere Strukturelemente, also beispielsweise auch um einen weiteren Träger oder ähnliches, handeln.

Neben der Einbringung der Schaumstoffschicht zwischen zwei Bauelemente ist es jedoch auch bekannt, nur ein einzelnes Bauteil mit einer Schaumstoffschicht zu versehen. Dieser Vorgang wird häufig auch als "Hinterschäumen" bezeichnet und kann ebenfalls für die zuvor beschriebenen oder ähnliche Formteile zum Einsatz kommen.

Während der chemischen Reaktion, durch die das Reaktionsgemisch aufschäumt, breitet sich dieses zunehmend aus und verdrängt dabei die in dem Hohlraum der zu verbindenden Bauteile vorhandene Luft beziehungsweise das dort vorhandene Gas, so dass hier für eine gerichtete Abführung der Luft beziehungsweise des Gases gesorgt werden muss. Ein weiterer, sehr wesentlicher Aspekt bei der Erzeugung eines Formteils mit einer Schaumstoffschicht besteht daher auch darin, dass eine Vorrichtung zur Herstellung eines derartigen Formteils, also beispielsweise ein Schäumwerkzeug, in der Lage sein muss, die zuvor genannte Luftabführung zu gewährleisten und darüber hinaus dem entstehenden Reaktionsdruck standzuhalten. Hierfür sind spezielle Dichtungssysteme erforderlich, weil bei nicht ausreichend wirksamen Dichtungen so genannte "Abziehlunker" entstehen können, die stark vergrößerte beziehungsweise verformte CO₂-Zellen innerhalb der Schaumstoffschicht ausbilden, so dass die Schaumstoffschicht nicht die erforderliche Qualität aufweist. Dabei kann es sogar so weit kommen, dass das gesamte Formteil unbrauchbar wird. Die zuvor beschriebenen Dichtungssysteme in einer Vorrichtung zur Herstellung eines Formteils, erfordern bisher in nachteiliger Weise einen sehr breiten, umlaufenden Bauteilrand am Formteil, der in einem Nachfolgeprozess als Abfall abgetrennt werden muss, was wiederum einen zusätzlichen Fertigungsaufwand sowie erhebliche Material- und Prozesskosten mit sich bringt. Bei den bislang zum Einsatz kommenden Dichtungssystemen handelt es sich häufig um so genannte "Konturdichtungen". Die Konturdichtungen des Schäumwerkzeuges bleiben zumindest abschnittsweise so lange geöffnet, bis der Schaumstoff sich nähert. Im Anschluss daran muss die Konturdichtung innerhalb kürzester Zeit ihre Dichtfunktion ausführen, was eine entsprechend aufwändige Ansteuerung beziehungsweise Schaltung erfordert. In der Regel werden für den Betrieb der Konturdichtungen pneumatische Systeme genutzt. Beim Einsatz dieser Konturdichtungen ist es jedoch nahezu unvermeidbar, dass ein gewisser Teil des Schaumstoffes den Dichtungsbereich passiert, da ansonsten die Luft beziehungsweise das Gas nicht vollständig aus dem Hohlraum zwischen dem Träger und der Formhaut entweichen kann.

In der DE 698 27 178 T2 wird beispielsweise eine Konturdichtung für ein Schäumwerkzeug beschrieben, die ein expandierbares Schlauchelement aufweist, dessen Wandung durch Erhöhung des in dem Schlauchelement herrschenden Innendruckes elastisch verformbar ist. Dabei wird bei der Bezugnahme auf den im Schlauchelement herrschenden Innendruck von normalem Luftdruck ausgegangen, sodass eine Erhöhung des Innendruckes eine Anhebung des Betrages über den normalen Luftdruck bedeutet. Ein die Dichtung bildender Teil der Konturdichtung besteht gemäß der DE 698 27 178 T2 aus einem massiven Körper aus elastischem Werkstoff. Dieser Teil der Konturdichtung ist in einer Führungsnut des Schäumwerkzeuges aufgenommen und somit wie ein Kolben bewegbar. Da bei der bekannten Lösung die Dichtung und das Schlauchelement einteilig ausgeführt sind, stellt die Konturdichtung ein sehr komplexes und aufwändig herzustellendes Element dar. Derartige Konturdichtungen für Schäumwerkzeuge unterliegen zudem einem nicht unerheblichen Verschleiß, da sie sowohl thermisch als auch mechanisch stark beansprucht werden. Aus dem genannten Grund müssen die Konturdichtungen in regelmäßigen Abständen gewartet und ausgetauscht werden. Hieraus resultieren ebenfalls hohe Herstellungskosten der auf diese Weise erzeugten Formteile.

Aus der DE 10 2007 025 884 A1 ist zudem ein Hinterschäumverfahren und eine hierfür geeignete Vorrichtung zur Herstellung eines mit einer Dekorseite ausgestatteten Bauteils bekannt. Bei diesem Verfahren kommen keine Konturdichtungen mehr zum Einsatz. Gemäß dem Offenbarungsgehalt der Druckschrift werden insbesondere im Randbereich des Dekorstücks Verdickungen ausgebildet, die als Dichtung dienen. Diese Dichtung bildet damit eine Labyrinth- oder Kanaldichtung, die entlang des gesamten Umfangs des zu erzeugenden Bauteils verläuft.

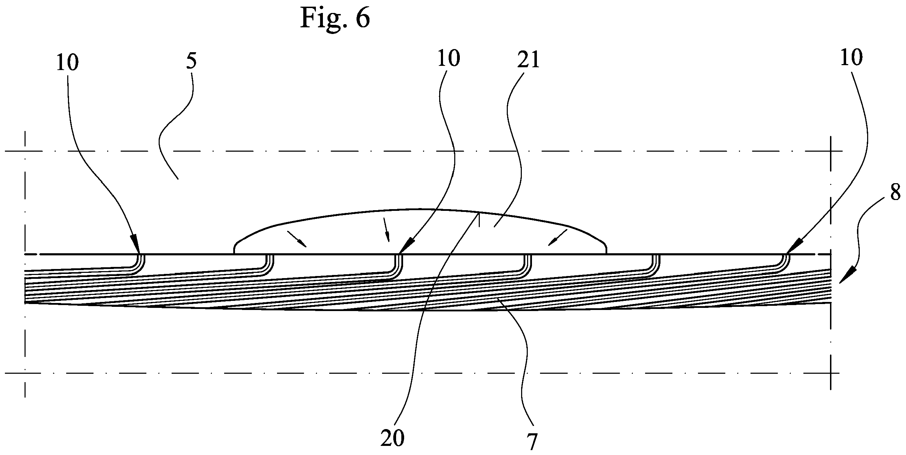

Darüber hinaus geht beschreibt die DE 10 2012 219 107 A1 ein Verfahren zur Herstellung eines Verkleidungsteiles für ein Fahrzeug sowie ein derartiges Verkleidungsteil. Das Verkleidungsteil besteht seinerseits aus einer Formhaut und einem Träger, zwischen denen ein Hohlraum ausgebildet ist, der in einer geeigneten Vorrichtung zur Herstellung des Verkleidungsteils durch ein aufschäumendes Reaktionsgemisch mit Schaumstoff befüllt wird. Der Schaumstoff bildet nach seiner Aushärtung eine stoffschlüssige Verbindung zwischen dem Träger und der Formhaut. In dieser Schrift werden unterschiedlich gestaltete Kanaldichtungen beschrieben, die jeweils in den Randbereich des Trägers eingebracht sind und aus bevorzugt rippenförmigen Erhöhungen bestehen, zwischen denen ein Kanal zur Entlüftung des während des Schäumvorganges entstehenden und im Hohlraum vorhandenen Gases ausgebildet ist. Die hohlraumseitigen Einlassöffnungen der in der DE 10 2012 219 107 A1 offenbarten Kanäle zur Entlüftung sind dabei jeweils als einfache Öffnungen der Kanalverläufe ausgeführt. Im Zusammenhang mit der Figur 6C wird eine spezielle Kanaldichtung beschrieben, bei der die einzelnen Kanäle unter einem spitzen Winkel zum Außenrand des Trägers verlaufen und geradlinig sowie parallel zueinander ausgerichtet sind.

Als weiteren Stand der Technik wird noch auf die Druckschrift WO 2008 / 012435 A2 verwiesen.

Die WO 2008/012435 A2 beschreibt ein Formteil gemäß dem Oberbegriff des Anspruchs 1.

Die EP 2 087 985 A2 beschreibt ein Verfahren zur Herstellung eines Formteils.

Der Erfindung liegt die Aufgabe zugrunde, ein Formteil bereitzustellen, das einen einfachen Aufbau aufweist, und sich mit fertigungstechnisch geringem und prozesssicherem Aufwand herstellen lässt, wobei auch in einer Serienproduktion stets qualitativ gleichbleibende und hochwertige Formteile erzeugbar sein sollen. Es ist ferner eine Vorrichtung nicht Teil der Erfindung anzugeben, mit der ein derartiges Formteil hergestellt werden kann und wenigstens ein hierfür geeignetes Verfahren zu definieren.

Die Erfindung löst diese Aufgabenstellung mit den Merkmalen der unabhängigen Patentansprüche 1, 13 und 14. Weitere Ausgestaltungen der Erfindung sind Gegenstand der sich jeweils anschließenden Unteransprüche.

Ein Formteil, gebildet aus einer stoffschlüssigen Verbindung zwischen einem Träger, einer Formhaut und einem zwischen Träger und Formhaut in einen Hohlraum des Formteils eingebrachten, ursprünglich flüssigen und durch eine chemische Reaktion aufgeschäumten sowie verfestigten Schaumstoff, wobei entlang des Außenrandes des Formteils, zwischen dem Träger und der Formhaut eine aus mehreren, nebeneinander angeordneten Kanälen bestehende Kanaldichtung vorhanden ist, wurde erfindungsgemäß dahingehend weitergebildet, dass die einzelnen Kanäle der Kanaldichtung in Richtung des mit dem Schaumstoff ausgefüllten Hohlraumes des Formteils in einem Bogen auslaufen und unmittelbar in dem mit Schaumstoff ausgefüllten Hohlraum enden, wobei jeder Kanal der Kanaldichtung eine entgegen der Richtung des sich durch das Aufschäumen ausbreitenden Schaumstoffes weisende Einlassöffnung aufweist.

Die für die Qualität des zu erzeugenden Formteils wesentliche Entlüftung wird bei der erfindungsgemäßen Lösung ganz allgemein ausgedrückt durch eine Mehrzahl einzelner Kanäle realisiert, die in die maßgeblichen Randbereiche des Trägers eingearbeitet sind. Die Besonderheit besteht vorliegend in der bogenförmigen Ausführung der hohlraumseitigen Einlässe der einzelnen Kanäle. Dadurch kann nämlich erreicht werden, dass die sich ausbreitende Schaumstofffront und das von dieser verdrängte Gasvolumen optimal in die Kanäle der Kanaldichtung eindringen können, ohne dass beispielsweise schräge Anlaufkanten der Einlassöffnung die Abführung der Luft beziehungsweise das Eindringen des Schaumstoffgemisches erschweren.

Die Dichtung wird gemäß der vorliegenden Erfindung nicht in der Vorrichtung zur Herstellung eines Formteils, also in dem Schäumwerkzeug vorgesehen, sondern unmittelbar am Träger des Formteils. Dies bedeutet einen enormen fertigungstechnischen und wirtschaftlichen Vorteil, weil das Schäumwerkzeug sich dadurch erheblich vereinfacht. Zur Abdichtung wird die verhältnismäßig hohe Fluidreibung des Schaumstoffes in einem engen Kanal genutzt. Durch diese Fluidreibung entsteht zusätzlich Wärme, welche die chemische Reaktion des Reaktionsgemisches weiter beschleunigt und die Viskosität des Schaumstoffes zusätzlich erhöht. Infolgedessen steigt die Fluidreibung an. Auf diese Weise entsteht ein sich in seiner Wirkung selbstverstärkender Prozess, der wiederum für eine deutlich beschleunigte Aushärtung der Schaumstoffschicht in der Kanaldichtung sorgt.

Maßgeblich ist folglich der Viskositätsunterschied zwischen Luft und Schaumstoff, der wiederum den jeweiligen Strömungswiderstand beeinflusst.

Interessant an dieser Vorgehensweise ist ferner, dass man ohne steuernde Elemente in der zum Einsatz kommenden Vorrichtung zur Herstellung eines Formteils, also beispielsweise in einem Schäumwerkzeug, auskommt.

Darüber hinaus kann auf die erfindungsgemäße Weise der bislang bei Konturdichtungen im Schäumwerkzeug entstehende Abfall auf ein absolutes Minimum reduziert werden. Damit sind Formteile nach der Erfindung wesentlich wirtschaftlicher herstellbar als bisher. Es lassen sich prozesssichere Entgasungs- beziehungsweise Entlüftungsfunktionen, eine prozesssichere Abdichtung und erhebliche Kostenreduzierungen erreichen. Die zum Einsatz kommende Kanaldichtung ist dabei insgesamt verschleiß- und wartungsarm.

Als erste Ausgestaltung der Erfindung ist dabei ein Formteil anzusehen, bei dem die Kanäle der Kanaldichtung geradlinig verlaufen und unter einem spitzen Winkel zum Außenrand des Formteils ausgerichtet sind. Eine derartige Anordnung der Kanäle hat sich als fertigungstechnisch und strömungstechnisch optimal herausgestellt. Zudem kann dadurch eine relativ hohe Kanaldichte im Rahmen der Kanaldichtung erreicht werden.

Eine alternative Lösung hierzu besteht vorliegend darin, dass die Kanäle der Kanaldichtung, in Strömungsrichtung betrachtet, einen gekrümmten, einen mäanderförmigen oder einen zick-zack-artigen Verlauf aufweisen.

Dabei besteht das Grundprinzip darin, dass die gesamte Kanaldichtung bevorzugt aus einer Mehrzahl einzelner Kanäle in Labyrinthform zusammengesetzt ist, so dass damit die Entlüftung beziehungsweise Entgasung optimiert werden kann. Je enger dabei die Einlassöffnungen der einzelnen Kanäle der Kanaldichtung beieinander liegen, desto besser wird die Qualität der Ausschäumung des Hohlraumes zwischen Formhaut und Träger.

Erfindungsgemäß weist jeder Kanal der Kanaldichtung eine entgegen der Richtung des sich durch das Aufschäumen ausbreitenden Schaumstoffes weisende Einlassöffnung auf. Die Ausbreitung der Schaumstofffront kann recht genau vorherbestimmt werden, da sie sich nach der Innenraumgeometrie des auszufüllenden Hohlraumes zwischen Träger und Formhaut des Formteils richtet. Die exakte Ausrichtung der Einlassöffnung auf die sich ausbreitende Schaumstofffront ermöglicht einen reibungsarmen Eintritt des aufschäumenden Reaktionsgemisches, das nach seiner Aushärtung den Schaumstoff bildet. Die eingangs bereits beschriebene Fluidreibung des Schaumstoffes wird folglich erst nach dem Eintritt in den Kanal genutzt.

Die Einlassöffnung bildet dabei im erfindungsgemäßen Sinne die endseitige Mündung des Bogens eines jeden Kanals, wobei eine spezielle Ausführungsvariante der Kanaldichtung darin besteht, dass der Abstand zwischen zwei benachbart zueinander angeordneten Einlassöffnungen zwischen 25 mm und 35 mm beträgt. Bevorzugt wird hierbei jedoch ein Abstand im Bereich von 30 mm. Versuche haben ergeben, dass diese Auslegung eine optimale Abführung des vorhandenen Gases und eine bestmögliche Aufnahme des sich ausbreitenden Reaktionsgemisches in die Kanäle ermöglicht.

Die geometrische Gestaltung der Kanaldichtung sowie die Anordnung der einzelnen Kanäle erlaubt eine sehr genaue Aussage über das Verhalten der Kanaldichtung und ist für die Qualität des zu erzeugenden Formteils von entscheidender Bedeutung. Aus diesem Grund geht ein weiterführender Vorschlag der Erfindung dahin, die Kanäle der Kanaldichtung äquidistant zueinander anzuordnen.

Die einzelnen Kanäle der Kanaldichtung können darüber hinaus einen wellenförmigen, bevorzugt sinusförmigen Querschnitt aufweisen. Selbstverständlich sind auch andere Geometrien, wie eine V-Form oder eine U-Form möglich. Die Wellenform, insbesondere die sinusförmige Geometrie, hat sich als besonders vorteilhaft erwiesen, da sie aufgrund der Erleichterung der Entformung des Trägers aus einer Gussform zur Herstellung des Trägers eine fertigungstechnisch günstige Variante darstellt und zudem eine verhältnismäßig große Verbindungsfläche zwischen der Formhaut und den durch die Kanäle der Kanaldichtung ausgebildeten Klebeflächen bereitstellt. Der Schaumstoff bildet nämlich gleichzeitig eine Art Klebstoff zwischen Formhaut und Träger, da er eine stoffschlüssige Verbindung zwischen diesen Bauelementen herstellt.

Für die geometrische Auslegung des Querschnittes eines einzelnen Kanals der Kanaldichtung wurde in Abhängigkeit von der Viskosität des zu verarbeitenden Schaumstoffes eine Querschnittsfläche zwischen 0,15 mm² und 0,4 mm² ermittelt. Wie daraus erkennbar wird, weisen die Kanäle der Kanaldichtung insgesamt eine verhältnismäßig geringe Fläche auf und sind folglich verhältnismäßig schmal ausgelegt. Dies führt dazu, dass eine optimale Entlüftung erreicht wird und gleichzeitig die eingangs bereits beschriebene und in den Kanälen durch den Eintritt des Schaumstoffes entstehende Reibungswärme in sinnfälliger Weise für die Beschleunigung des Prozesses genutzt werden kann.

Für die Länge des Kanals der Kanaldichtung haben sich darüber hinaus in Abhängigkeit von der Viskosität des Schaumstoffes Größenordnungen zwischen 30 mm und 60 mm als besonders vorteilhaft herausgestellt. Dabei gilt generell die Faustregel, dass bei hoher Viskosität des Schaumstoffes eine kurze Länge des Kanals der Kanaldichtung ausreichend ist, während bei einer geringen Viskosität des Schaumstoffes die Kanallänge größer sein muss. Da die Länge der Kanäle der Kanaldichtung jedoch insgesamt verhältnismäßig gering ist, bedeutet dies, dass auch der Randbereich am Träger beziehungsweise an der Formhaut schmal ausgeführt werden kann, was zu der eingangs bereits erwähnten Reduzierung des entstehenden Abfalls führt.

Um eine möglichst problemlose Abführung der Luft beziehungsweise Gase aus dem Hohlraum zwischen Träger und Formhaut zu gewährleisten, geht eine Ausgestaltung der Erfindung dahin, dass die Kanaldichtung eine gegenüber der Umgebung offene Luftabführungsöffnung aufweist. Diese Luftabführungsöffnung kann im einfachsten Fall eine Öffnung sein, wobei jeder Kanal der Kanaldichtung eine eigene Öffnung aufweisen kann und ebenso eine gemeinsame Öffnung für mehrere Kanäle vorgesehen werden kann. Von Bedeutung ist hierbei lediglich, dass dem austretenden Luft- beziehungsweise Gasvolumen kein maßgeblicher Widerstand entgegengesetzt wird, um die Abführung nicht zu behindern.

Ein weiterer, sehr wesentlicher Aspekt der Verbesserung der Luftabführung ist darin zu sehen, dass Öffnungen der Kanäle der Kanaldichtung insbesondere in Eckbereichen und/oder Geometrieübergängen des Formteils vorgesehen werden. Dementsprechend müssen auch an den höchstgelegenen Punkten der Kanaldichtung Luftabführungsöffnungen vorhanden sein. Dieses Prinzip ist beispielsweise auch bei der Entlüftung von Heizungen in Wohnräumen bekannt und wird für die erfindungsgemäße Lösung ausgenutzt. Von Bedeutung ist die Anordnung von Luftabführungsöffnungen an hoch gelegenen Punkten des Trägers immer dann, wenn das zu erzeugende Formteil Steigungen aufweist.

Wie bereits ausgeführt wurde, verfügen viele Formteile über sehr komplexe Geometrien. Zudem ist es häufig erforderlich, dass Aussparungen vorgesehen werden, in die später Instrumente, Aggregate oder zusätzliche Bauelemente eingesetzt werden müssen. Da dies aus fertigungstechnischen Gründen bislang nicht anders möglich war, wurden diese Aussparungen bei aus dem Stand der Technik bekannten Lösungen vollständig mit Schaumstoff beschichtet, was zu einem erheblichen Materialverlust führte, weil die dadurch geschlossenen Aussparungen nach der Entnahme des Formteils aus dem Schäumwerkzeug nachträglich von dem angefügten Material befreit werden mussten, um die genannten Instrumente, Bauelemente oder Aggregate in das Formteil einsetzen zu können.

Mit der erfindungsgemäßen Lösung wird es nunmehr erstmals möglich, die äußere Kontur einer derartigen Aussparung mit einer Kanaldichtung zu umgeben, so dass das Formteil in diesem Bereich keine Schaumstoffschicht mehr aufweist und folglich unmittelbar nach der Erzeugung des Formteils fertig gestellt ist. Nacharbeiten beschränken sich damit auf ein Minimum und der entstehende Abfall reduziert sich mit dieser Lösung wesentlich.

Eine Vorrichtung zur Herstellung eines zuvor beschriebenen Formteils weist zumindest ein Oberwerkzeug auf, das auf ein hierzu korrespondierendes Unterwerkzeug aufsetzbar oder mit diesem verbindbar ist, wobei zwischen Oberwerkzeug und Unterwerkzeug eine das zu erzeugende Formteil bildende Kavität ausgebildet ist.

Das in der Vorrichtung herzustellende Formteil besteht aus einer stoffschlüssigen Verbindung zwischen einem Träger, einer Formhaut und der zwischen Träger und Formhaut einzubringenden, ursprünglich flüssigen und durch eine chemische Reaktion aufschäumenden und selbst aushärtenden Schaumstoffschicht.

Die für die Formgebung maßgeblichen Randbereiche des Trägers oder der Formhaut werden mit einer Kanaldichtung ausgestattet, was dazu führt, dass die Vorrichtung als solche ohne eine derartige Konturdichtung ausgeführt ist. Die Vorrichtung vereinfacht sich damit in ganz entscheidendem Maße, was zu einer Reduzierung des Herstellungsaufwandes und einer erheblichen Kostensenkung für die Erzeugung der Vorrichtung führt. Die in der Vorrichtung vorhandene Kavität weist die Negativform des zu erzeugenden Formteils auf, wie dies bislang auch der Fall war. Steuerungselemente für Konturdichtungen, also beispielsweise pneumatische Steuerungseinrichtungen und aufwändige Elektronik zur Umsetzung der Steuerungen können bei einer erfindungsgemäßen Vorrichtung jedoch vollständig entfallen oder zumindest auf ein absolutes Mindestmaß reduziert werden. Auch aufwändige Schiebersteuerungen, wie sie bei einigen Ausführungen derartiger Vorrichtungen bislang im Einsatz waren, sind nicht mehr oder nur noch in stark eingeschränkten Umfang erforderlich.

Das erfindungsgemäße Verfahren zur Herstellung eines Formteils mit einer derartigen Vorrichtung ist durch folgende Verfahrensschritte gekennzeichnet:
- Einbringung einer Formhaut in einen in der Vorrichtung ausgebildeten Teil der Kavität,
- Anordnung eines Trägers in dem korrespondierenden, anderen Teil der in der Vorrichtung ausgebildeten Kavität,
- Schließen der Vorrichtung unter gleichzeitiger Schaffung der erforderlichen Reaktionsbedingungen für den Aufschäumvorgang des Reaktionsgemisches,
- Einbringung des flüssigen, später den Schaumstoff bildenden Reaktionsgemisches in einen zwischen Träger und Formhaut vorhandenen Hohlraum, wobei durch den Schäumvorgang die Luft, gefolgt von dem aufschäumenden und sich in seinem Volumen ausbreitenden Reaktionsgemisch über eine am Träger und/oder an der Formhaut vorhandene, aus mehreren nebeneinander angeordneten Kanälen bestehende Kanaldichtung aus dem Zwischenraum abgeführt wird, bis das Reaktionsgemisch die Kanaldichtung befüllt und durch seine Aushärtung verschließt,
- vollständige Aushärtung des Reaktionsgemisches unter Ausbildung der den Träger und die Formhaut stoffschlüssig miteinander verbindenden Schicht des Schaumstoffes ,
- öffnen der Vorrichtung und Entnahme des erzeugten Formteils.

Alternativ hierzu kann die Vorrichtung auch erst dann geschlossen werden, wenn zuvor das flüssige, später den Schaumstoff bildende Reaktionsgemisch in einen zwischen Träger und Formhaut vorhandenen Hohlraum eingebracht wurde. Werden in diesem Zusammenhang die erforderlichen Reaktionsbedingungen für den Aufschäumvorgang des Reaktionsgemisches geschaffen, führt dies dazu, dass durch den sich ausbildenden Schäumvorgang die Luft, gefolgt von dem aufschäumenden und sich in seinem Volumen ausbreitenden Reaktionsgemisch über die am Träger und/oder an der Formhaut vorhandene Kanaldichtung aus dem Hohlraum abgeführt wird, bis das Reaktionsgemisch die Kanaldichtung befüllt und durch seine Aushärtung verschließt.

Die Schaffung der erforderlichen Reaktionsbedingungen für den Aufschäumvorgang des Reaktionsgemisches umfasst dabei beispielsweise die Erwärmung des Ober- beziehungsweise Unterwerkzeugs was in herkömmlicher Weise durch eine Heizeinrichtung oder Zuführung erwärmten Wassers erfolgen kann. Erfindungsgemäß ist von Bedeutung, dass die Kanaldichtung entweder am Träger oder an der Formhaut beziehungsweise auch an beiden Bauelementen ausgebildet sein kann. Das reagierende Reaktionsgemisch, welches später den Schaumstoff bildet, schiebt die in dem Hohlraum zwischen Träger und Formhaut vorhandene Luft vor sich her, was aus den unterschiedlichen Viskositäten von Luft und Schaumstoff herrührt, so dass die nachfolgende Schaumstofffront sich bis in die kleinsten Eckbereiche des zu erzeugenden Formteils ausdehnen kann und damit eine hundertprozentige Füllung des Hohlraumes zwischen Formhaut und Träger erreicht wird, was einen von Fehlstellen, Lufteinschlüssen oder Lunkern freies Formteil ermöglicht. Dadurch kann mit dem erfindungsgemäßen Verfahren ein hohes Maß an Qualität der Fertigung gewährleistet werden.

Eine erste Ausgestaltung des erfindungsgemäßen Verfahrens ist darin zu sehen, dass die Formhaut in das Unterwerkzeug und der Träger in das korrespondierende Oberwerkzeug eingebracht werden.

Alternativ hierzu ist es jedoch ebenfalls möglich, die Formhaut in das Oberwerkzeug und den Träger in das korrespondierende Unterwerkzeug einzubringen.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ausschnittsweise einen Blick auf eine Kanaldichtung eines Trägers zur Herstellung eines Formteils,
- Figur 2:: ausschnittsweise einen Schnitt durch eine erste Ausführung eines Formteils
- Figur 3:: ausschnittsweise einen Schnitt durch eine zweite Ausführung eines Formteils,
- Figur 4:: ausschnittsweise einen Schnitt durch eine weitere Ausführung eines Formteils,
- Figur 5:: ausschnittsweise einen Träger mit darin ausgebildeten Kanälen,
- Figur 6:: einen möglichen Verlauf der Ausbreitung der Schaumstofffront anhand eines Formteils,
- Figur 7:: eine geöffnete Vorrichtung zur Herstellung eines Formteils,
- Figur 8:: die in Figur 7 gezeigte Vorrichtung zur Herstellung eines Formteils im geschlossenen Zustand, und
- Figur 9:: den vergrößerten Ausschnitt IX aus Figur 8.

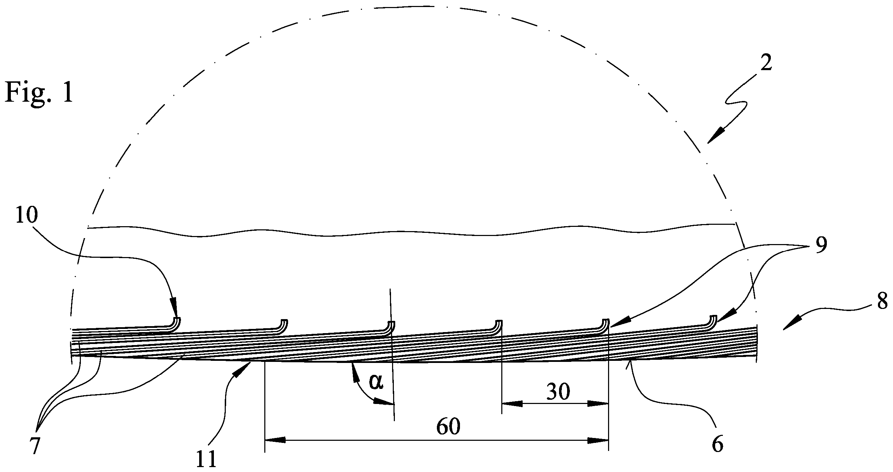

Die **Figur 1** gestattet ausschnittsweise einen Blick auf eine Kanaldichtung 8 eines Trägers 2 zur Herstellung eines Formteils 1. Der Träger 2 weist dabei lediglich im Bereich seines Außenrandes 6 die erwähnte Kanaldichtung 8 auf. Dies hat in erfindungsgemäßer Weise den Vorzug, dass eine Vorrichtung 13 zur Herstellung des Formteils 1, also das Schäumwerkzeug, extrem einfach ausgeführt werden kann, da in diese Vorrichtung 13 keine Kanaldichtungen eingearbeitet werden müssen.

Die Kanaldichtung 8 in Figur 1 besteht aus einer Vielzahl äquidistant und in diesem Fall zusätzlich parallel zueinander verlaufender Kanäle 7 die am Außenrand 6 des Trägers 2 jeweils eine Luftabführungsöffnung 11 aufweisen und auf Ihrer der Luftabführungsöffnung 11 gegenüberliegenden Seite in einem Bogen 9 auslaufen, was zur Folge hat, dass eine sich in einem Hohlraum 4 zwischen einer Formhaut 3 und dem Träger 2 während des Aufschäumvorganges ausbreitende Schaumstofffront 20 in verbesserter Weise in die Kanäle 7 eindringen kann. Zudem wird durch diese Ausführung der Kanäle 7 auch die Luftabführung aus dem Hohlraum 4 in entscheidendem Maße verbessert. Von Bedeutung für die Ausführung der Kanaldichtung 8 ist darüber hinaus, dass die Kanäle 7 unter einem spitzen Winkel zum Außenrand 6 des Trägers 2 angeordnet sind. Das Ende des Bogens 9 eines jeden Kanals 7 und damit die in diesem Bereich vorhandene Einlassöffnung 10 ist bei dem dargestellten Beispiel unter einem Winkel α = 90° zum Außenrand 6 ausgerichtet. Darüber hinaus beträgt der Abstand zwischen zwei benachbarten Bögen 9 hierbei 30 mm und die Länge eines jeden Kanals 7 etwa 60 mm. Mit diesen Abmessungen wurden bislang optimale Ergebnisse der Luftabführung erreicht.

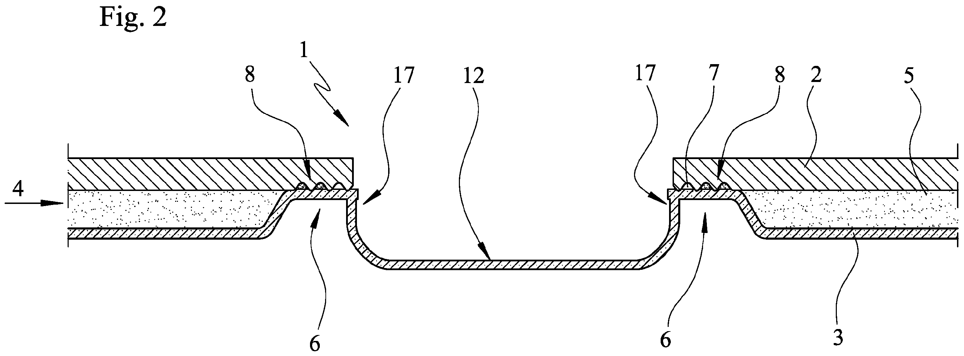

Aus der **Figur 2** geht ausschnittsweise ein Schnitt durch eine erste Ausführung eines Formteils 1 hervor, bei der die Besonderheit darin besteht, dass das Formteil 1 eine Aussparung 12 aufweist, die nach der Herstellung des Formteils 1 beispielsweise dazu dienen kann, eine Armatur oder ein Instrument beziehungsweise ein Bauteil aufzunehmen. Das Formteil 1 besteht im vorliegenden Fall aus einem Träger 2 und einer Formhaut 3, zwischen denen eine Schicht aus Schaumstoff 5 als stoffschlüssige Verbindung angeordnet ist. Die Schicht aus Schaumstoff 5 wird durch ein ursprünglich flüssiges, durch eine chemische Reaktion aufschäumendes und anschließend selbst aushärtendes Reaktionsgemisch erzeugt, das in den zwischen der Formhaut 3 und dem Träger 2 vorhandenen Hohlraum 4 eingebracht wird und dort ausreagiert, das heißt, aufschäumt, bis der Hohlraum 4 vollständig ausgefüllt ist. Dabei dient eine am Außenrand 6 zwischen Träger 2 und Formhaut 3 vorhandene Kanaldichtung 8 dazu, zunächst die in dem Hohlraum 4 vorhandene Luft und das infolge der chemischen Reaktion des Aufschäumens entstehende Gas gerichtet abzuführen. Hierfür besteht die Kanaldichtung 8 aus einer Mehrzahl einzelner Kanäle 7, auf deren Anordnung und Aufbau nachfolgend noch näher eingegangen wird. Im Übergangsbereich zwischen der Aussparung 12 und dem Formteil 1 sind bei dieser Ausführung ferner Sollbruchstellen 17 vorhanden, die das Abtrennen der die Aussparung 12 bildenden Formhaut 3, also des nicht mehr benötigten Teils der Formhaut 3, erleichtern. Von Bedeutung ist hierbei, dass der Bereich der Aussparung 12 nicht mit einer Schicht aus Schaumstoff 5 versehen ist, was ausschließlich durch die zum Einsatz kommende Kanaldichtung 8 ermöglicht wird, denn diese kann bis unmittelbar an den Randbereich der Aussparung 12 herangeführt werden. Damit wird der anfallende Abfall reduziert, was eine erhebliche Einsparung mit sich bringt.

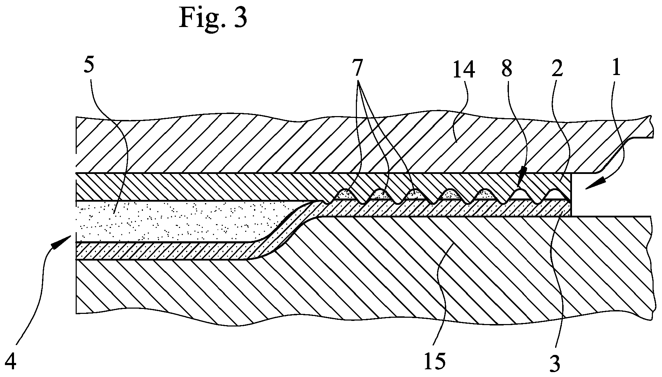

Die **Figur 3** zeigt ausschnittsweise einen Schnitt durch eine zweite Ausführung eines Formteils 1. Andeutungsweise ist dabei auch ein Teil des Oberwerkzeugs 14 und des Unterwerkzeugs 15 angedeutet. Aus der Figur 3 geht deutlich die erfindungsgemäße Besonderheit hervor, die darin besteht, dass nicht in der Vorrichtung 13 zur Herstellung des Formteils 1, sondern unmittelbar an dem zu erzeugenden Formteil 1, genauer gesagt am Träger 2 des Formteils 1, eine Kanaldichtung 8 ausgebildet ist. Diese Kanaldichtung 8 besteht aus einer Vielzahl einzelner, vorzugsweise labyrinthartig ausgeführter Kanäle 7, die hier eine sinuswellenförmige Gestalt aufweisen und die der Abführung der in dem Hohlraum 4 vorhandenen Luft und des während des Aufschäumens des Schaumstoffes entstehenden Gases, bei dem es sich überwiegend um Kohlendioxid (CO₂) handelt, dienen und in denen der eintretende Schaumstoff aushärtet und damit die Kanaldichtung 8 erst dann verschließt, wenn das gesamte im Hohlraum 4 vorhandene Luftvolumen vollständig aus dem zu erzeugenden Formteil 1 entwichen ist. Der aufschäumende Schaumstoff erzeugt somit eine stoffschlüssige Verbindung zwischen dem Träger 2 und der Formhaut 3. Die Kanaldichtung 8 ist dabei am Träger 2 als eine bereichsweise Reduzierung des Querschnittes ausgebildet. Folglich werden hier keine Rippen im Sinne eines zusätzlichen Materialauftrages verwendet.

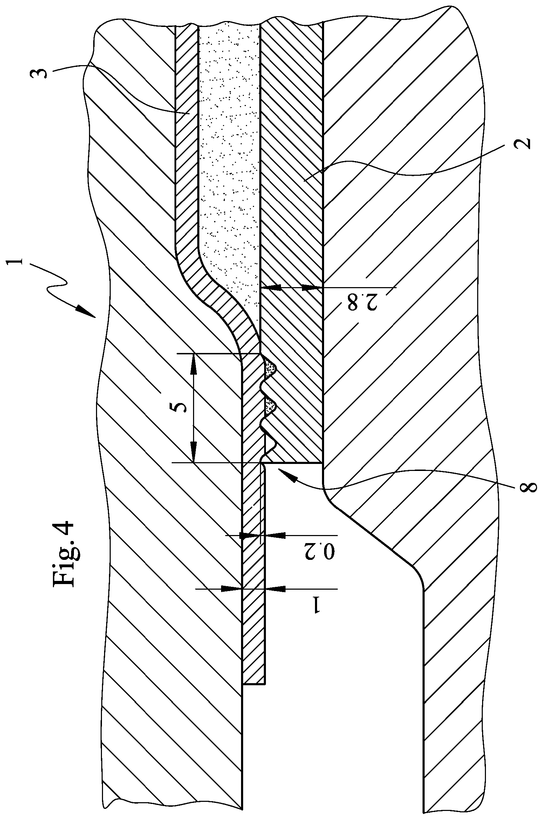

Bei dem Beispiel in **Figur 4** ist eine spezielle Ausführungsvariante eines Trägers 2 mit einer an diesem anliegenden Formhaut 3 dargestellt. Dabei weist der in diesem Fall lediglich 2,8 mm starke Träger in seinem äußeren Randbereich eine Kanaldichtung 8 auf, die aus System aus Kanälen 7 besteht. Die Besonderheit dieser Kanaldichtung 8 ist darin zu sehen, dass diese hierbei lediglich eine Breite von 5 mm aufweist und die Kanäle 7 über einen sinusförmigen Verlauf verfügen. Bei der Formhaut 3 handelt es sich um ein lediglich 1 mm starke und daher leicht verformbares Element, das beispielsweise als Dekorschicht ausgebildet sein kann. Durch die geringe Materialstärke der Formhaut 3 und ihre damit einhergehende elastische Verformbarkeit ist gewährleistet, dass sich die Formhaut 3 durch den über das Werkzeug 14, 15 aufgebrachten Druck im Bereich der Kanaldichtung 8 um etwa 0,2 mm in die Kanaldichtung 8 einprägt, was deshalb auch als "Überdrücken" bezeichnet wird. Es hat sich herausgestellt, dass dadurch eine zusätzliche Verbesserung der Abdichtung im Bereich der Kanaldichtung 8 erreicht werden kann. Das Einprägen beziehungsweise Überdrücken der Formhaut 3 in die Kanaldichtung 8 erfolgt folglich erst bei geschlossener Vorrichtung 13 zur Herstellung eines Formteils 1, also bei geschlossenem Schäumwerkzeug.

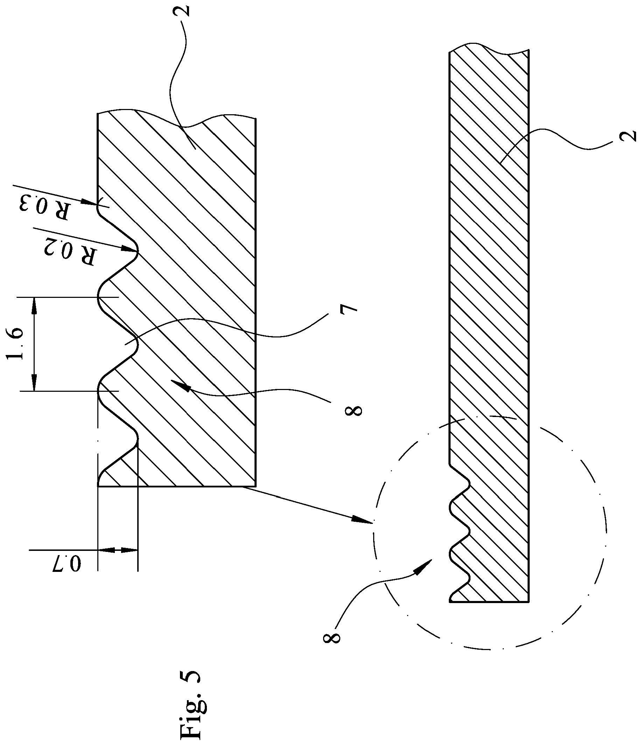

Mehr im Detail, als dies im Rahmen der Darstellung der Figur 4 möglich war, zeigt die **Figur 5** den Endabschnitt des Trägers 2 im Bereich der Kanaldichtung 8. Hieraus geht hervor, dass die einzelnen, mit einem sinusförmigen Verlauf ausgeführten Kanäle 7 eine Tiefe von 0,7 mm und eine Breite von 1,6 mm aufweisen. Bei dieser speziellen Ausführungsvariante, wie sie in Figur 5 gezeigt ist, beträgt der bodenseitige Radius der Kanäle 7 hier R = 0,2 mm. Der Übergangsradius zwischen dem Kanal 7 und der Oberfläche des Trägers 2 weist darüber hinaus einen Wert von R = 0,3 mm auf.

In der **Figur 6** ist noch einmal veranschaulicht, wie die Ausbreitung des Schaumstoffes 5 innerhalb des Formteils 1 erfolgt. Dabei ist zu beachten, dass vorliegend die Kanaldichtung 8 aus einer Vielzahl einzelner, labyrinthartig gestalteter Kanäle 7 besteht. Auf der dem Hohlraum 4 zugewandten Innenseite des Formteils 1 sind mehrere, möglichst dicht beieinander liegende Einlassöffnungen 10 der Kanäle 7 vorhanden, über die einerseits die im Hohlraum 4 vorhandene Luft beziehungsweise das ausgebildete Gas abgeführt werden und andererseits der Eintritt der sich ausbreitenden Schaumstofffront 20 möglich ist. Der Schaumstoff 5 kann dabei erst in die Kanäle 7 eindringen, wenn die Luft beziehungsweise das Gas vollständig aus dem Hohlraum 4 entwichen ist. Aus der Figur 6 wird deutlich, dass sich zum Abschluss dieses Entlüftungsvorganges eine Luftblase 21 ausbildet, die über die letzte noch freie und nicht vom Schaumstoff bereits befüllte Einlassöffnung 10 abgeführt wird. Durch die innerhalb der Luftblase 21 angedeuteten Pfeile soll hierbei veranschaulicht werden, wie sich das Volumen dieser Luftblase 21 während des Aufschäumvorganges des Schaumstoffes 5 gleichmäßig reduziert. Nach dem Aushärten des Schaumstoffes 5 stellt dieser eine stoffschlüssige Verbindung zwischen dem Träger 2 und der Formhaut 3 her.

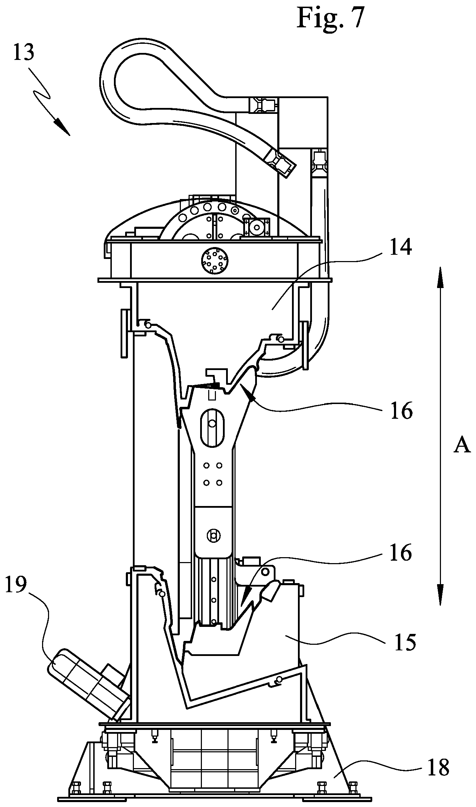

Die **Figur 7** zeigt in vereinfachter Form eine geöffnete Vorrichtung 13 zur Herstellung eines Formteils 1, bei der es sich vorliegend um ein Schäumwerkzeug handelt. Die Vorrichtung 13 besteht aus einem Oberwerkzeug 14 und einem diesem gegenüberliegenden Unterwerkzeug 15, wobei bei dem dargestellten Beispiel das Oberwerkzeug 14 in der durch den Doppelpfeil "A" symbolisierten, vertikalen Richtung bewegbar ist, so dass die Vorrichtung 13 durch die Bewegung des Oberwerkzeugs 14 geöffnet beziehungsweise geschlossen werden kann. Auf den einander gegenüberliegenden Seiten des Oberwerkzeuges 14 und des Unterwerkzeugs 15 verfügen diese über eine Kavität 16, die der Negativform des in der Vorrichtung 13 zu erzeugenden Formteils 1 entspricht. In die Kavität 16 wird einerseits die Formhaut 3 und andererseits der Träger 2 eingesetzt. Nach dem Verschließen der Vorrichtung 13 kann ein Schaumstoff 5 in den zwischen der Formhaut 3 und dem Träger 2 gebildeten Hohlraum 4 eingebracht und darin aufgeschäumt werden. In dem Oberwerkzeug 14 beziehungsweise im Unterwerkzeug 15 sind ferner in der Figur 7 nicht gezeigte Einrichtungen vorhanden, die eine Vorwärmung der Werkzeuge ermöglichen, so dass dadurch die Reaktionsbedingungen des Schaumstoffes 5 verbessert werden. Die Vorrichtung 13 verfügt darüber hinaus in an sich bekannter Weise über einen Rahmen 18, der als Tragkonstruktion zum Aufstellen der Vorrichtung 13 dient. Über eine Antriebseinheit 19, bei dem es sich hier um einen Elektromotor handelt, wird das Oberwerkzeug 14 in Richtung des Doppelpfeils A bewegt, so dass die Vorrichtung 13 geöffnet beziehungsweise geschlossen werden kann.

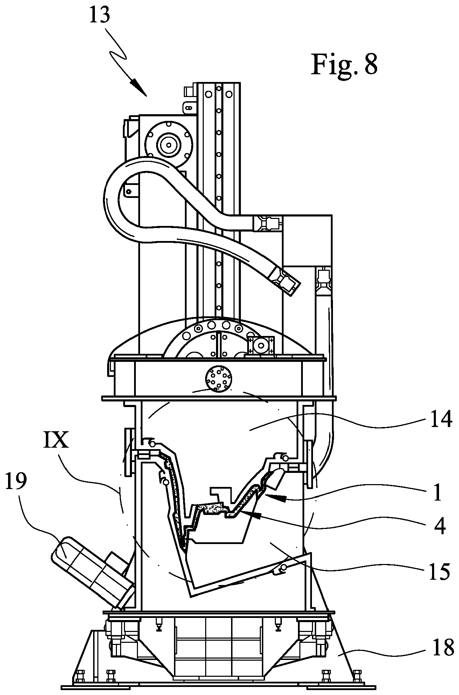

Die geschlossene Vorrichtung 13 ist in der **Figur 8** veranschaulicht, woraus ersichtlich wird, dass das Oberwerkzeug 14 in Richtung des Unterwerkzeugs 15 bewegt wurde und nun in dieser Position gegenüber der Umgebung abdichtend auf dem Unterwerkzeug 15 aufliegt. In das Unterwerkzeug 15 ist eine Formhaut 3 und in das Oberwerkzeug 14 ein Träger 2 eingesetzt, zwischen denen der Hohlraum 4 mit einem Schaumstoff 5 befüllt wird, wodurch eine stoffschlüssige Verbindung zwischen dem Träger 2 und der Formhaut 3 hergestellt wird.

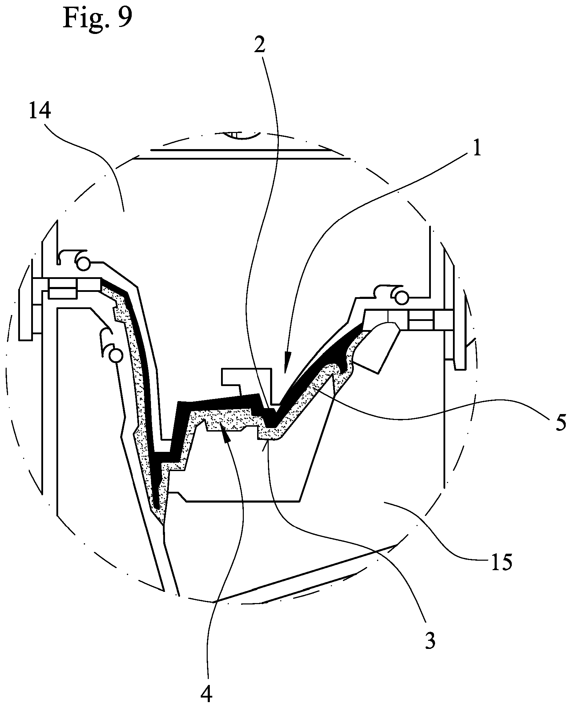

Der vergrößerte Ausschnitt aus Figur 8 bildet den Gegenstand der Darstellung in **Figur 9****.** Hieraus wird das zuvor beschriebene Detail in vergrößerter Ansicht deutlich. Zwischen dem Träger 2 im Oberwerkzeug 14 und der Formhaut 3 im Unterwerkzeug 15 ist hierbei die in dem Hohlraum 4 erzeugte Schicht aus Schaumstoff 5 erkennbar. Das auf diese Weise gebildete Formteil 1 kann im Anschluss daran unmittelbar aus der Vorrichtung 13 entnommen werden, wozu zunächst das Oberwerkzeug 14 in eine Öffnungsstellung verbracht wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere beschränkt sich die Erfindung nicht auf die nachfolgend angegebenen Merkmalskombinationen, sondern es können auch für den Fachmann offensichtlich ausführbare andere Kombinationen und Teilkombination aus den offenbarten Merkmalen gebildet werden.

### BEZUGSZEICHENLISTE:

- 1: Formteil
- 2: Träger
- 3: Formhaut
- 4: Hohlraum
- 5: Schaumstoff
- 6: Außenrand
- 7: Kanal
- 8: Kanaldichtung
- 9: Bogen
- 10: Einlassöffnung
- 11: Luftabführungsöffnung
- 12: Aussparung
- 13: Vorrichtung
- 14: Oberwerkzeug
- 15: Unterwerkzeug
- 16: Kavität
- 17: Sollbruchstelle
- 18: Rahmen
- 19: Antriebseinheit
- 20: Schaumstofffront
- 21: Luftblase

## Patentansprüche

1. Formteil (1), gebildet aus einer stoffschlüssigen Verbindung zwischen einem Träger (2), einer Formhaut (3) und einem zwischen Träger (2) und Formhaut (3) in einen Hohlraum (4) des Formteils (1) eingebrachten, ursprünglich flüssigen und durch eine chemische Reaktion aufgeschäumten sowie verfestigten Schaumstoff (5), wobei entlang des Außenrandes (6) des Formteils (1), zwischen dem Träger (2) und der Formhaut (3) eine aus mehreren, nebeneinander angeordneten Kanälen (7) bestehende Kanaldichtung (8) vorhanden ist,
wobei die einzelnen Kanäle (7) der Kanaldichtung (8) in Richtung des mit dem Schaumstoff (5) ausgefüllten Hohlraumes (4) des Formteils (1) in einem Bogen (9) auslaufen und unmittelbar in dem mit Schaumstoff (5) ausgefüllten Hohlraum (4) enden, **dadurch gekennzeichnet, dass** jeder Kanal (7) der Kanaldichtung (8) eine entgegen der Richtung des sich durch das Aufschäumen ausbreitenden Schaumstoffes (5) weisende Einlassöffnung (10) aufweist.

2. Formteil nach Anspruch 1, **dadurch gekennzeichnet, dass** die Kanäle (7) der Kanaldichtung (8) geradlinig verlaufen und unter einem spitzen Winkel zum Außenrand (6) des Formteils (1) ausgerichtet sind.

3. Formteil nach Anspruch 1, **dadurch gekennzeichnet, dass** die Kanäle (7) der Kanaldichtung (8), in Strömungsrichtung des sich ausbreitenden Schaumstoffes (5) betrachtet, einen gekrümmten, einen mäanderförmigen oder einen zick-zack-artigen Verlauf aufweisen.

4. Formteil nach einem der voranstehenden Ansprüche,
**dadurch gekennzeichnet, dass** die Einlassöffnung (10) die endseitige Mündung des Bogens (9) eines jeden Kanals (7) bildet.

5. Formteil nach einem der voranstehenden Ansprüche,
**dadurch gekennzeichnet, dass** der Abstand zwischen zwei benachbart zueinander angeordneten
Einlassöffnungen (10) zwischen 25 mm und 35 mm beträgt.

6. Formteil nach einem der vorstehend genannten Ansprüche,
**dadurch gekennzeichnet, dass**
die Kanäle (7) der Kanaldichtung (8) äquidistant zueinander verlaufen.

7. Formteil nach einem der vorstehend genannten Ansprüche,
**dadurch gekennzeichnet, dass**
der Querschnitt der Kanäle (7) der Kanaldichtung (8) eine Wellenform, eine V-Form oder eine U-Form aufweist.

8. Formteil nach einem der vorstehend genannten Ansprüche,
**dadurch gekennzeichnet, dass**
der Querschnitt der Kanäle (7) der Kanaldichtung (8) in Abhängigkeit von der Viskosität des zu verarbeitenden Schaumstoffes (5) zwischen 0,15 mm² und 0,4 mm² beträgt.

9. Formteil nach einem der vorstehend genannten Ansprüche,
**dadurch gekennzeichnet, dass**
die Länge der Kanäle (7) der Kanaldichtung (8) in Abhängigkeit von der Viskosität des Schaumstoffes (5) zwischen 30 mm und 60 mm beträgt.

10. Formteil nach einem der vorstehend genannten Ansprüche,
**dadurch gekennzeichnet, dass**
die Kanäle (7) der Kanaldichtung (8) eine gegenüber der Umgebung offene Luftabführungsöffnung (11) aufweist.

11. Formteil nach einem der vorstehend genannten Ansprüche,
**dadurch gekennzeichnet, dass**
in Eckbereichen und/oder Geometrieübergängen des Formteils (1) jeweils mindestens eine Luftabführungsöffnung (11) vorhanden ist.

12. Formteil nach einem der vorstehend genannten Ansprüche,
**dadurch gekennzeichnet, dass**
das Formteil (1) wenigstens eine Aussparung (12) aufweist, deren Kontur von einer Kanaldichtung (8) umgeben ist.

13. Verfahren zur Herstellung eines Formteils nach einem der Ansprüche 1 bis 12, hergestellt in einer Vorrichtung zur Herstellung eines Formteils umfassend ein Oberwerkzeug (14), das auf ein hierzu korrespondierendes Unterwerkzeug (15) aufsetzbar oder mit diesem verbindbar ist, wobei zwischen Oberwerkzeug (14) und Unterwerkzeug (15) eine das zu erzeugende Formteil (1) bildende Kavität (16) ausgebildet ist, wobei die Randbereiche der Kavität (16) ohne eine Kanaldichtung (8) ausgebildet sind, mit den folgenden Verfahrensschritten:
- Einbringung einer Formhaut (3) in einen in der Vorrichtung (13) ausgebildeten Teil der Kavität (16),
- Anordnung eines Trägers (2) in dem korrespondierenden, anderen Teil der in der Vorrichtung (13) ausgebildeten Kavität (16),
- Schließen der Vorrichtung (13) unter gleichzeitiger Schaffung der erforderlichen Reaktionsbedingungen für den Aufschäumvorgang des Reaktionsgemisches,
- Einbringung des flüssigen, später den Schaumstoff (5) bildenden Reaktionsgemisches in einen zwischen Träger (2) und Formhaut (3) vorhandenen Hohlraum (4), wobei durch den Schäumvorgang die Luft, gefolgt von dem aufschäumenden und sich in seinem Volumen ausbreitenden Reaktionsgemisch über eine am Träger (2) und/oder an der Formhaut (3) vorhandene, aus mehreren nebeneinander angeordneten Kanälen (7) bestehende Kanaldichtung (8) aus dem Zwischenraum (12) abgeführt wird, bis das Reaktionsgemisch die Kanaldichtung (8) befüllt und durch seine Aushärtung verschließt,
- vollständige Aushärtung des Reaktionsgemisches unter Ausbildung der den Träger (2) und die Formhaut (3) stoffschlüssig miteinander verbindenden Schicht des Schaumstoffes (5),
- Öffnen der Vorrichtung (13) und Entnahme des erzeugten Formteils (1).

14. Verfahren zur Herstellung eines Formteils nach einem der Ansprüche 1 bis 12, hergestellt in einer Vorrichtung zur Herstellung eines Formteils umfassend ein Oberwerkzeug (14), das auf ein hierzu korrespondierendes Unterwerkzeug (15) aufsetzbar oder mit diesem verbindbar ist, wobei zwischen Oberwerkzeug (14) und Unterwerkzeug (15) eine das zu erzeugende Formteil (1) bildende Kavität (16) ausgebildet ist, wobei die Randbereiche der Kavität (16) ohne eine Kanaldichtung (8) ausgebildet sind, mit den folgenden Verfahrensschritten:
- Einbringung einer Formhaut (3) in einen in der Vorrichtung (13) ausgebildeten Teil der Kavität (16),
- Anordnung eines Trägers (2) in dem korrespondierenden, anderen Teil der in der Vorrichtung (13) ausgebildeten Kavität (16),
- Einbringung des flüssigen, später den Schaumstoff (5) bildenden Reaktionsgemisches in einen zwischen Träger (2) und Formhaut (3) vorhandenen Hohlraum (4),
- Schließen der Vorrichtung (8) unter gleichzeitiger Schaffung der erforderlichen Reaktionsbedingungen für den Aufschäumvorgang des Reaktionsgemisches, sodass durch den Schäumvorgang die Luft, gefolgt von dem aufschäumenden und sich in seinem Volumen ausbreitenden Reaktionsgemisch über eine am Träger (2) und/oder an der Formhaut (3) vorhandene, aus mehreren nebeneinander angeordneten Kanälen (7) bestehende Kanaldichtung (8) aus dem Hohlraum (4) abgeführt wird, bis das Reaktionsgemisch die Kanaldichtung (8) befüllt und durch seine Aushärtung verschließt,
- vollständige Aushärtung des Reaktionsgemisches unter Ausbildung der den Träger (2) und die Formhaut (3) stoffschlüssig miteinander verbindenden Schicht des Schaumstoffes (5),
- Öffnen der Vorrichtung (13) und Entnahme des erzeugten Formteils (1).

15. Verfahren zur Herstellung eines Formteils nach Anspruch 13 oder 14, **dadurch gekennzeichnet, dass** die Formhaut (3) in das Unterwerkzeug (15) und der Träger (2) in das korrespondierende Oberwerkzeug (14) eingebracht wird.

16. Verfahren zur Herstellung eines Formteils nach Anspruch 13 oder 14, **dadurch gekennzeichnet, dass** die Formhaut (3) in das Oberwerkzeug (14) und der Träger (2) in das korrespondierende Unterwerkzeug (15) eingebracht werden.

## Claims

1. Moulded part (1) formed from a material bond between a carrier (2), a moulded skin (3) and an originally liquid foam (5) which has been introduced into a cavity (4) of the moulded part (1) between the carrier (2) and the moulded skin (3) and foamed and also solidified by a chemical reaction, wherein along the outer edge (6) of the moulded part (1) a channel seal (8) consisting of a plurality of channels (7) arranged next to one another is present between the carrier (2) and the moulded skin (3), wherein the individual channels (7) of the channel seal (8) run out in an arc (9) in the direction of the cavity (4) of the moulded part (1) that is filled with the foam (5) and end immediately in the cavity (4) that is filled with foam (5), **characterized in that** each channel (7) of the channel seal (8) has an inlet opening (10) which points counter to the direction of the foam (5) which expands as a result of the foaming.

2. Moulded part according to Claim 1, **characterized in that** the channels (7) of the channel seal (8) run straight and are oriented at an acute angle with respect to the outer edge (6) of the moulded part (1).

3. Moulded part according to Claim 1, **characterized in that** the channels (7) of the channel seal (8), viewed in the direction of flow of the expanding foam (5), have a course which is curved, of a meandering form or zigzag-like.

4. Moulded part according to one of the preceding claims, **characterized in that** the inlet opening (10) forms the end orifice of the arc (9) of each channel (7).

5. Moulded part according to one of the preceding claims, **characterized in that** the spacing between two inlet openings (10) which are arranged adjacent to one another amounts to between 25 mm and 35 mm.

6. Moulded part according to one of the preceding claims, **characterized in that** the channels (7) of the channel seal (8) run equidistantly from one another.

7. Moulded part according to one of the preceding claims, **characterized in that** the cross section of the channels (7) of the channel seal (8) has a wave shape, a V-shape or a U-shape.

8. Moulded part according to one of the preceding claims, **characterized in that** the cross-sectional area of the channels (7) of the channel seal (8) amounts to between 0.15 mm² and 0.4 mm² depending on the viscosity of the foam (5) to be processed.

9. Moulded part according to one of the preceding claims, **characterized in that** the length of the channels (7) of the channel seal (8) amounts to between 30 mm and 60 mm depending on the viscosity of the foam (5).

10. Moulded part according to one of the preceding claims, **characterized in that** the channels (7) of the channel seal (8) have an air discharge opening (11) which is open with respect to the environment.

11. Moulded part according to one of the preceding claims, **characterized in that** at least one air discharge opening (11) is present in each case in corner regions and/or geometry transitions of the moulded part (1).

12. Moulded part according to one of the preceding claims, **characterized in that** the moulded part (1) has at least one cutout (12), the contour of which is surrounded by a channel seal (8).

13. Method for producing a moulded part according to one of Claims 1 to 12, produced in an apparatus for producing a moulded part that comprises an upper tool (14) which can be placed onto or connected to a corresponding lower tool (15), wherein a cavity (16) which forms the moulded part (1) to be produced is formed between the upper tool (14) and the lower tool (15), wherein the peripheral regions of the cavity (16) are formed without a channel seal (8), said method having the following method steps:
- introducing a moulded skin (3) into a part of the cavity (16) that is formed in the apparatus (13),
- arranging a carrier (2) in the corresponding, other part of the cavity (16) which is formed in the apparatus (13),
- closing the apparatus (13) with simultaneous establishment of the required reaction conditions for the operation of foaming the reaction mixture,
- introducing the liquid reaction mixture which later forms the foam (5) into a cavity (4) present between the carrier (2) and the moulded skin (3), wherein, as a result of the foaming operation, the air, followed by the foaming reaction mixture which expands in terms of its volume, is discharged out of the intermediate space (12) via a channel seal (8) which is present on the carrier (2) and/or on the moulded skin (3) and consists of a plurality of channels (7) arranged next to one another until the reaction mixture fills the channel seal (8) and closes said channel seal (8) by hardening of said reaction mixture,
- completely hardening the reaction mixture with the formation of the layer of the foam (5) that materially bonds the carrier (2) and the moulded skin (3) to one another,
- opening the apparatus (13) and removing the moulded part (1) produced.

14. Method for producing a moulded part according to one of Claims 1 to 12, produced in an apparatus for producing a moulded part that comprises an upper tool (14) which can be placed onto or connected to a corresponding lower tool (15), wherein a cavity (16) which forms the moulded part (1) to be produced is formed between the upper tool (14) and the lower tool (15), wherein the peripheral regions of the cavity (16) are formed without a channel seal (8), said method having the following method steps:
- introducing a moulded skin (3) into a part of the cavity (16) that is formed in the apparatus (13),
- arranging a carrier (2) in the corresponding other part of the cavity (16) which is formed in the apparatus (13),
- introducing the liquid reaction mixture which later forms the foam (5) into a cavity (4) present between the carrier (2) and the moulded skin (3),
- closing the apparatus (13) with simultaneous establishment of the required reaction conditions for the operation of foaming the reaction mixture, such that, as a result of the foaming operation, the air, followed by the foaming reaction mixture which expands in terms of its volume, is discharged out of the cavity (4) via a channel seal (8) which is present on the carrier (2) and/or on the moulded skin (3) and consists of a plurality of channels (7) arranged next to one another until the reaction mixture fills the channel seal (8) and closes said channel seal by hardening of said reaction mixture,
- completely hardening the reaction mixture with the formation of the layer of the foam (5) that materially bonds the carrier (2) and the moulded skin (3) to one another,
- opening the apparatus (13) and removing the moulded part (1) produced.

15. Method for producing a moulded part according to Claim 13 or 14, **characterized in that** the moulded skin (3) is introduced into the lower tool (15) and the carrier (2) is introduced into the corresponding upper tool (14).

16. Method for producing a moulded part according to Claim 13 or 14, **characterized in that** the moulded skin (3) is introduced into the upper tool (14) and the carrier (2) is introduced into the corresponding lower tool (15).

## Revendications

1. Pièce moulée (1), formée d'une liaison de matière entre un support (2), une enveloppe de moule (3) et une matière alvéolaire (5) qui a été introduite dans une cavité (4) de la pièce moulée (1) entre le support (2) et l'enveloppe de moule (3), qui est à l'origine liquide et qui a été expansée et solidifiée par réaction chimique, une garniture d'étanchéité à canaux (8), qui comprend une pluralité de canaux (7) disposés les uns à côté des autres, étant présente le long du bord extérieur (6) de la pièce moulée (1) entre le support (2) et l'enveloppe de moule (3), les canaux individuels (7) de la garniture d'étanchéité à canaux (8) s'étendant suivant un arc (9) en direction de la cavité (4), remplie de matière alvéolaire (5), de la pièce moulée (1) et se terminant directement dans la cavité (4) remplie de matière alvéolaire (5), **caractérisée en ce que** chaque canal (7) de la garniture d'étanchéité à canaux (8) comporte une ouverture d'entrée (10) dirigée à l'opposé de la direction de la matière alvéolaire (5) en expansion à cause du moussage.

2. Pièce moulée selon la revendication 1, **caractérisée en ce que** les canaux (7) de la garniture d'étanchéité à canaux (8) s'étendent en ligne droite et sont orientés en formant un angle aigu avec le bord extérieur (6) de la pièce moulée (1).

3. Pièce moulée selon la revendication 1, **caractérisée en ce que** les canaux (7) de la garniture d'étanchéité à canaux (8) ont, par référence au sens d'écoulement de la matière alvéolaire en expansion (5), une allure incurvée en forme de méandre ou de zigzag.

4. Pièce moulée selon l'une des revendications précédentes, **caractérisée en ce que** l'ouverture d'entrée (10) forme l'embouchure côté extrémité de l'arc (9) de chaque canal (7).

5. Pièce moulée selon l'une des revendications précédentes, **caractérisée en ce que** la distance entre deux ouvertures d'entrée (10) disposées de manière adjacente l'une à l'autre est comprise entre 25 mm et 35 mm.

6. Pièce moulée selon l'une des revendications précédentes, **caractérisée en ce que** les canaux (7) de la garniture d'étanchéité à canaux (8) s'étendent à égale distance les uns des autres.

7. Pièce moulée selon l'une des revendications précédentes, **caractérisée en ce que** la section transversale des canaux (7) de la garniture d'étanchéité à canaux (8) a une forme d'onde, une forme en V ou une forme en U.

8. Pièce moulée selon l'une des revendications précédentes, **caractérisée en ce que** la section transversale des canaux (7) de la garniture d'étanchéité à canaux (8) est comprise entre 0,15 mm² et 0,4 mm² selon la viscosité de la matière alvéolaire (5) à traiter.

9. Pièce moulée selon l'une des revendications précédentes, **caractérisée en ce que** la longueur des canaux (7) de la garniture d'étanchéité à canaux (8) est comprise entre 30 mm et 60 mm selon la viscosité de la matière alvéolaire (5).

10. Pièce moulée selon l'une des revendications précédentes, **caractérisée en ce que** les canaux (7) de la garniture d'étanchéité à canaux (8) comportent une ouverture d'évacuation d'air (11) qui est ouverte sur l'environnement.

11. Pièce moulée selon l'une des revendications précédentes, **caractérisée en ce qu'**au moins une ouverture d'évacuation d'air (11) est présente dans chacune des zones d'angle et/ou des transitions géométriques de la pièce moulée (1).

12. Pièce moulée selon l'une des revendications précédentes, **caractérisée en ce que** la pièce moulée (1) comporte au moins un évidement (12) dont le contour est entouré d'une garniture d'étanchéité à canaux (8).

13. Procédé de production d'une pièce moulée selon l'une des revendications 1 à 12, produite dans un dispositif de production d'une pièce moulée comprenant un outil supérieur (14), qui peut être placé sur un outil inférieur correspondant (15) ou relié à celui-ci, une cavité (16) qui forme la pièce moulée (1) à produire étant formée entre l'outil supérieur (14) et l'outil inférieur (15), les zones de bord de la cavité (16) étant formées sans garniture d'étanchéité à canaux (8), le procédé comprenant les étapes suivantes :
- introduire une enveloppe de moule (3) dans une partie de la cavité (16) qui est formée dans le dispositif (13),
- disposer un support (2) dans l'autre partie correspondante de la cavité (16) formée dans le dispositif (13),
- fermer le dispositif (13) et créer en même temps les conditions réactionnelles nécessaires au processus de moussage du mélange réactionnel,
- introduire le mélange réactionnel liquide, qui formera ultérieurement la matière alvéolaire (5), dans une cavité (4) présente entre le support (2) et l'enveloppe de moule (3), pendant le processus de moussage, l'air, suivi du mélange réactionnel qui mousse et s'expanse dans son volume, étant évacué de l'espace intermédiaire (12) par une garniture d'étanchéité à canaux (8), présente au niveau du support (2) et/ou de l'enveloppe de moule (3) et comprenant une pluralité de canaux adjacents (7), jusqu'à ce que le mélange réactionnel remplisse la garniture d'étanchéité à canaux (8) et la ferme par durcissement,
- faire durcir entièrement le mélange réactionnel par formation de la couche de matière alvéolaire (5) qui relie entre eux le support (2) et l'enveloppe de moule (3) par une liaison de matière,
- ouvrir le dispositif (13) et retirer la pièce moulée (1) produite.

14. Procédé de fabrication d'une pièce moulée selon l'une des revendications 1 à 12, produite dans un dispositif de production de pièce moulée comprenant un outil supérieur (14) qui peut être placé sur un outil inférieur correspondant (15) ou relié à celui-ci, une cavité (16) formant la pièce moulée (1) à produire étant formée entre l'outil supérieur (14) et l'outil inférieur (15), les zones de bord de la cavité (16) étant formées sans garniture d'étanchéité à canaux (8), le procédé comprenant les étapes suivantes :
- introduire une enveloppe de moule (3) dans une partie de la cavité (16) formée dans le dispositif (13),
- disposer un support (2) dans l'autre partie correspondante de la cavité (16) formée dans le dispositif (13),
- introduire le mélange réactionnel liquide, qui formera ultérieurement la matière alvéolaire (5), dans une cavité (4) présente entre le support (2) et l'enveloppe de moule (3),
- fermer le dispositif (13) et créer en même temps les conditions réactionnelles nécessaires au processus de moussage du mélange réactionnel de sorte que grâce au processus de moussage l'air, suivi du mélange réactionnel qui mousse et s'expanse dans son volume, soit évacué de la cavité (4) par une garniture d'étanchéité à canaux (8), présente au niveau du support (2) et/ou de l'enveloppe de moule (3) et comprenant une pluralité de canaux (7) disposés les uns à côté des autres, jusqu'à ce que le mélange réactionnel remplisse la garniture d'étanchéité à canaux (8) et la ferme par durcissement,
- faire durcir entièrement le mélange réactionnel par formation de la couche de matière alvéolaire (5) qui relie entre eux le support (2) et l'enveloppe de moule (3) par une liaison de matière,
- ouvrir le dispositif (13) et retirer de la pièce moulée (1) produite.

15. Procédé de production d'une pièce moulée selon la revendication 13 ou 14, **caractérisé en ce que** l'enveloppe de moule (3) est introduite dans l'outil inférieur (15) et le support (2) est introduit dans l'outil supérieur correspondant (14).

16. Procédé de production d'une pièce moulée selon la revendication 13 ou 14, **caractérisé en ce que** l'enveloppe de moule (3) est introduite dans l'outil supérieur (14) et le support (2) est introduit dans l'outil inférieur correspondant (15).
